(19) Europäisches Patentamt
European Patent Office
Office européen des brevets

(11) **EP 1 348 933 A1**

(12) **EUROPÄISCHE PATENTANMELDUNG**

(43) Veröffentlichungstag:
**01.10.2003 Patentblatt 2003/40**

(51) Int Cl.⁷: **G01B 15/02**, B60C 11/24,
G01N 22/00

(21) Anmeldenummer: **03005698.0**

(22) Anmeldetag: **13.03.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **20.03.2002 DE 10212310**

(71) Anmelder: **Continental Aktiengesellschaft**
**30001 Hannover (DE)**

(72) Erfinder:
• **Doerr, Alfons, Dr.**
**30163 Garbsen (DE)**
• **Knöchel, Reinhard, Prof., Dr.**
**23336 Elmshorn (DE)**

(54) **Reifenprofiltiefe mit Mikrowellenreflexion nach Polarisation oder Frequenz**

(57) Bestimmung einer Reifenprofiltiefe mit einem Sender (2) und einem Empfänger (3). Mikrowellen 1-10 GHz. Eine elektromagnetische Welle (8) wird an der Reifenoberfläche (9) und an der Grenzfläche (11) reflektiert. (10) ist die Profilschicht und (12) eine Material-schicht mit Stahldrähten. Polarisation, Frequenz werden verändert. Ein Rechner (1) berechnet die Reifen-profiltiefe basierend auf der stetigen Differenzierbarkeit der Wellenfunktion einer linear polarisierten elektroma-gnetischen Welle an Grenzflächen, wobei die Grenzflä-chen so ausgebildet sind, dass das Reflexionsverhalten von einer Eigenschaft der einfallenden elektromagneti-schen Welle abhängt.

Fig. 1

**Beschreibung**

Die Erfindung betrifft ein Verfahren und ein System zur Bestimmung einer Reifenprofiltiefe sowie ein entsprechendes Computerprogramm.

Aus dem Stand der Technik sind verschiedene Vorrichtungen und Verfahren zur Messung der Profiltiefe von Fahrzeugreifen bekannt. Aus der DE 197 05 047 A1 ist ein solches Verfahren bekannt, bei dem das Reifenprofil mit Laserlicht bestrahlt wird. Das Laserlicht erzeugt einen Lichtfleck auf der Profiloberfläche des Kraftfahrzeugreifens. Das von dem Reifenprofil reflektierte Licht wird durch einen bildauflösenden Sensor erfasst. Dabei beobachtet der bildauflösende Sensor Position und / oder die Form des Lichtflecks.

Aus der DE 195 23 917 A1 ist ein Verfahren bekannt, bei dem aus der Fahrzeuggeschwindigkeit und den Messwerten eines Nässesensors, der durch die Fahrzeugreifen nach hinten hochgeschleudertes Schleppwasser erfasst, die Profiltiefe bestimmt wird, indem diese Messwerte in einem Rechner mit einem Kennlinienfeld verglichen werden.

Aus der DE 199 49 337 A1 ist eine Vorrichtung zur Messung der Tiefe von Profilen bekannt, welche auf einem mechanischen Tastsensor, der einmal als kapazitiver und zum anderen als induktiver Wegaufnehmer ausgebildet ist, basiert.

Aus der DE 195 14 219 A1 ist ein Verfahren zur Ermittlung der Profiltiefe der Reifen eines Kraftfahrzeugs bekannt, welches auf der Bestimmung einer Profiltiefendifferenz zwischen den Reifen einer ersten und einer zweiten Achse basiert, und zwar ausgehend von einer aktuellen Profiltiefe der ersten Achse.

Aus der DE 197 44 076 A1 ist eine weitere Vorrichtung zur Reifenprofilmessung bekannt, die mit einer Sensoranordnung mit einem mechanischen, elektrischen, elektromechanischen, optischen, Radar- oder Ultraschall-Sensor ausgestattet ist.

Aus der US 5,216,372 ist schließlich ein Verfahren zur Ermittlung der Lage eines Stahlgürtels in einem Reifen mittels Mikrowellen bekannt.

Der Erfindung liegt die Aufgabe zu Grunde ein verbessertes Verfahren und System zur Bestimmung einer Reifenprofiltiefe sowie ein entsprechendes Computerprogramm zu schaffen.

Die der Erfindung zu Grunde liegende Aufgabe wird jeweils mit den Merkmalen der unabhängigen Patentansprüche gelöst. Bevorzugte Ausführungsformen der Erfindung sind in den abhängigen Patentansprüchen angegeben.

Die Erfindung geht von der Erkenntnis aus, dass die Grenzflächen zwischen Materialschichten in einem Reifen ein Reflexionsverhalten bzw. ein Transmissionsverhalten aufweisen, welches von einer Eigenschaft der einfallenden elektromagnetischen Welle abhängig ist. Bei dieser Eigenschaft kann es sich zum Beispiel um die Frequenz der elektromagnetischen Welle handeln und/-oder um deren Polarisationsrichtung.

Bei einer Ermittlung der Reifenprofiltiefe basierend auf der Frequenzabhängigkeit des Reflexionsverhaltens der Grenzflächen, wird diese Abhängigkeit des Reflexionsverhaltens der Grenzflächen von den jeweils aneinander angrenzenden Materialien bestimmt. Wird dagegen die Ermittlung der Reifenprofiltiefe mit einer elektromagnetischen Welle einer bestimmten Frequenz aber mit unterschiedlichen Polarisationswinkeln durchgeführt, so hängt das Reflexionsverhalten an der Grenzfläche von der Orientierung der Materialen der Grenzfläche ab.

Eine solche Orientierung ist beispielsweise für die in einem Reifen oftmals eingebetteten Stahldrahte, zum Beispiel eines Stahlgürtels gegeben. Beispielsweise haben diese Stahldrähte in den unterschiedlichen Gürtellagen eines Lkw-Reifens unterschiedliche Orientierungsrichtungen. Dies betrifft zum Bespiel die sogenannten Stahlkord-Gürtellagen, die Karkasse-Stahlkord-Einlage und den Drahtkern eines Lkw-Reifens. Motorrad- und Pkw-Reifen haben einen davon verschiedenen Aufbau mit unterschiedlichen Orientierungsrichtungen der Drahteinlagen.

Nach einer bevorzugten Ausführungsform macht sich die Erfindung den Umstand zu Nutze, dass im Laufstreifenbereich ein Reifen ein Schichtsystem unterschiedlicher Gummimischungen bzw. unterschiedlicher Stahlkord- und Gewebelagen darstellt. Diesen einzelnen Schichten können unterschiedliche effektive dielektrische Eigenschaften zugeordnet werden.

Wird zum Beispiel senkrecht oder mit einem gewissen Winkel zur Reifenoberfläche eine ebene elektromagnetische Welle eingestrahlt, so wird diese an den Grenzflächen der einzelnen Schichten reflektiert. Die Transmission bzw. Reflexion wird durch die dielektrischen Eigenschaften an den jeweiligen Grenzflächen bestimmt. Es kommt also zur Interferenz der an den Grenzflächen reflektierten Wellen. Die hieraus folgende resultierende Intensität des reflektierenden Strahlung ist eine Funktion der Dicken und der effektiven dielektrischen Dichten aller beteiligten Schichten in dem beleuchteten Laufflächenbereich.

Nach einer weiteren bevorzugten Ausführungsform macht sich die Erfindung den Umstand zu Nutze, dass die dielektrischen Eigenschaften der Gürtellagen in der Ebene parallel zur Lauffläche nicht isotrop sind. Dies ist dadurch begründet, dass sich die Gürtellagen aus einzelnen, zueinander parallel angeordneten Stahldrähten zusammensetzten, welche in einer Kautschuk-Matrix eingebettet sind.

Dies hat zur Folge, dass die Intensität einer linear polarisierten Welle, die an einer Gürtellage reflektiert wird, von der relativen Ausrichtung der Stahldrähte und der Polarisationsebene der eingestrahlten bzw. reflektierten Welle abhängt. Durch Variation der Polarisation der eingestrahlten Ebenenwelle kann die Reflexion an den einzelnen Gürtellagen im Reifen gezielt verändert werden.

Die effektive dielektrische Dichte der einzelnen Schichten variiert dabei, je nach Ausrichtung der Stahlkorde zur Polarisationsebene der elektromagnetischen Welle. Aus der Dicke der einzelnen Schichten und deren charakteristischen Variationen der dielektrischen Dichte in Abhängigkeit der Polarisation ergibt sich eine modellierbare Variation der reflektierten Intensität. Aus diesem Modell kann basierend auf der Messung der reflektierten Intensitäten die Reifenprofiltiefe berechnet werden.

Nach einer bevorzugten Ausführungsform der Erfindung erfolgt die Berechnung der Reifenprofiltiefe basierend auf der stetigen Differenzierbarkeit ebener Wellen an Grenzflächen.

Im Weiteren werden bevorzugte Ausführungsbeispiele der Erfindung mit Bezugnahme auf die Zeichnungen näher erläutert. Es zeigen:

Figur 1      ein Blockdiagramm einer ersten Ausführungsform eines erfindungsgemäßen Systems zur Bestimmung der Reifenprofiltiefe,

Figur 2      ein Blockdiagramm eines Realisierungsbeispiels der Ausführungsform der Figur 1,

Figur 3      eine schematische Darstellung von Schichten und deren Grenzflächen in einem Reifen,

Figur 4      ein Beispiel für den qualitativen Verlauf der Dielektrizitätskonstanten in einem Lkw-Reifen,

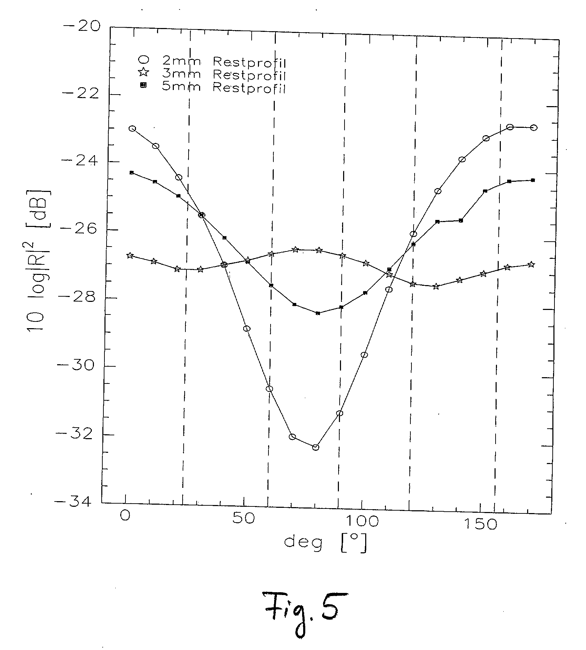

Figur 5      ein Messbeispiel für den Verlauf der Intensität der reflektierte Welle in Abhängigkeit von dem Polarisationswinkel für verschiedene Profiltiefen,

Figur 6      ein Blockdiagramm einer zweiten Ausführungsform der Erfindung, wobei die Frequenz zur Bestimmung der Profiltiefe variiert wird.

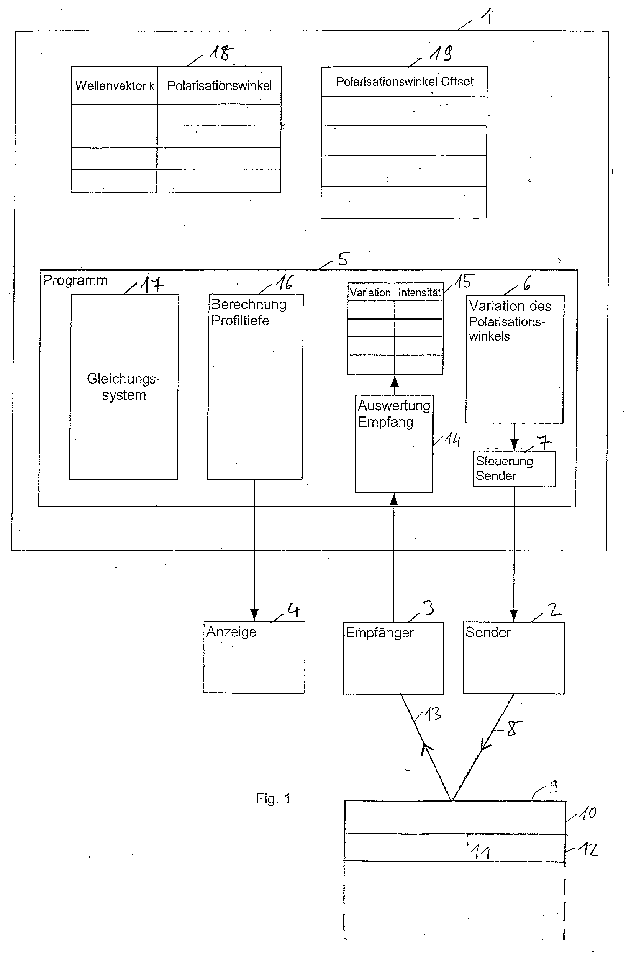

Die Figur 1 zeigt ein Ausführungsbeispiel für ein erfindungsgemäßes System zur Bestimmung der Reifenprofiltiefe. Das System beinhaltet einen Computer 1 sowie einen Sender 2, einen Empfänger 3 und eine Anzeige 4. Der Computer 1 steuert den Sender 2 und erhält von dem Empfänger 3 Daten hinsichtlich der vom Empfänger 3 empfangenen reflektierten Welle. Die Anzeige 4 dient zur Ausgabe der ermittelten Reifenprofiltiefe.

Der Computer 1 beinhaltet ein Programm 5, welches verschiedene Funktionen realisiert. Das Programm 5 beinhaltet ein Programm-Modul 6, das zur Bestimmung des Polarisationswinkels der auszusendenden elektromagnetischen Welle dient. Das Programm-Modul 6 ist mit einem Steuerungs-Modul 7 verknüpft.

Das Steuerungs-Modul 7 erhält von dem Programm-Modul 6 als Eingabeparameter den Polarisationswinkel der auszusendenden elektromagnetischen Welle. Das Steuerungs-Modul 7 steuert den Sender 2 entsprechend an, so dass dieser eine elektromagnetische Welle 8 mit der von dem Programm-Modul 6 vorgegebenen Polarisationswinkel in Richtung auf die Reifenoberfläche 9 abstrahlt.

An der Reifenoberfläche 9 wird ein Teil der elektromagnetischen Welle 8 reflektiert; der andere Teil der elektromagnetischen Wellen dringt in die Profil-Materialschicht des Reifens ein und wird teilweise an der Grenzfläche 11 reflektiert. Unterhalb der Grenzfläche 11 befindet sich eine Materialschicht 12. Bei der Materialschicht 12 handelt es sich beispielsweise um eine Einlage von Stahldrähten, die unter einem bestimmten Winkel in einer Kautschuk-Matrix eingebettet sind.

Die reflektierte elektromagnetische Welle 13 setzt sich aus den an der Reifenoberfläche 9 und an der Grenzfläche 11 reflektierten Anteilen der elektromagnetischen Welle 8 zusammen sowie gegebenenfalls aus weiteren reflektierten Anteilen, die an weiteren Grenzflächen entstehen.

Der Empfänger 3 dient zum Empfang der reflektierten elektromagnetischen Welle 13. Der Empfänger 3 gibt beispielsweise die Intensität der empfangenen reflektierten elektromagnetischen Welle 13 an das Programm-Modul 14 des Programms 5 aus. Das Programm-Modul 14 dient zur Auswertung der von dem Empfänger 3 empfangenen Daten. Beispielsweise schreibt das Programm-Modul 14 die von dem Empfänger 3 gelieferten Intensitätsdaten in die Tabelle 15. Die Tabelle 15 beinhaltet die Wertepaare aus dem Polarisationswinkel bzw. dessen Variation und der entsprechenden Intensität der reflektierten elektromagnetischen Welle.

Das Programm 5 beinhaltet ferner ein Programm-Modul 16 sowie ein Gleichungssystem 17. Das Programm-Modul 16 berechnet die Profiltiefe mit Hilfe des Gleichungssystems 17.

Der Computer 1 beinhaltet ferner einen Speicher 18. Der Speicher 18 dient zur Speicherung einer Kennlinie des effektiven Wellenvektors (k) in Abhängigkeit von dem Polarisationswinkel. Beispielsweise befindet sich in dem Speicher 18 eine Tabelle, die für jede Materialschicht in dem Reifen den Wellenvektor (k) für einen bestimmten vorgegebenen Polarisationswinkel der einfallenden Welle beinhaltet.

Für diejenigen Materialschichten, die ein anisotropes Verhalten aufweisen, ist der Speicher 19 vorgesehen. In dem Speicher 19 ist der Winkel der Ausrichtung der betreffenden Schichten in dem Reifen gespeichert. Dieser Drehwinkel dient als Offset für die Bestimmung des Wellenvektors k für einen konkreten Fall.

Beispielsweise haben die Gürtellagen in dem Reifen ein anisotropes Verhalten, da diese aus parallelen Drähten bestehen, die in einer bestimmten Richtung verlaufen. Für jede der Gürtellagen ist diese Richtung in Form eines Offset in dem Speicher 19 abgelegt.

Zur Bestimmung des Wellenvektors k für eine bestimmte Gürtellage und für einen bestimmten Polarisationswinkel der einfallenden elektromagnetischen Welle wird zunächst auf den Speicher 18 zugegriffen, um den Wellenvektor k für diese Gürtellage zu ermitteln.

Der aus dem Speicher 18 ausgelesene Wellenvektor k wird dann durch eine Änderungsfunktion, die von dem aktuellen Polarisationswinkel abhängt, modifiziert. Der aktuelle Polarisationswinkel wird dabei durch den in dem Speicher 19 abgelegten Offset korrigiert. Diese Berechnung wird von dem Programm-Modul 16 vorgenommen, welches hierzu auf den Speicher 18 und für Gürtellagen auch auf den Speicher 19 zugreift.

Mit Hilfe des Gleichungssystems 17, den Wellenvektoren k, der Materialschichten und den Intensitätswerten der Tabelle 15 berechnet das Programm-Modul 16 dann die Profiltiefe. Die Profiltiefe wird auf einer Anzeige 4 ausgegeben. Alternativ erfolgt auf der Anzeige 4 nur dann eine Ausgabe, wenn die Profiltiefe einen vorgegebenen Wert unterschritten hat.

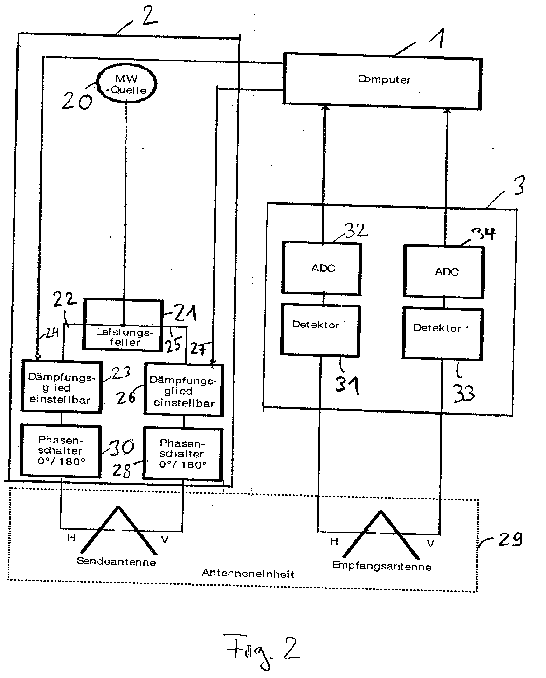

Die Figur 2 zeigt eine Ausführungsform des Systems der Figur 1 im Detail. Elemente der Figur 2, die Elementen der Figur 1 entsprechen, sind mit denselben Bezugszeichen bezeichnet.

Der Sender 2 beinhaltet eine Mikrowellen-Quelle 20, die mit einem Leistungsteiler 21 verbunden ist. Der Leistungsteiler 21 hat einen Ausgang 22, der mit einem Dämpfungsglied 23 verbunden ist. Das Dämpfungsglied 23 ist über dessen Eingang 24 einstellbar.

Der Ausgang des Dämpfungsglied 23 ist mit dem Phasenschalter 30 verbunden. Der Phasenschalter 25 erlaubt eine Phasenumschaltung zwischen 0° und 180°.

Entsprechend ist der Ausgang 25 des Leistungsteilers 21 mit einem Dämpfungsglied 26 verbunden. Das einstellbare Dämpfungsglied wird über dessen Eingang 27 angesteuert.

Der Ausgang des Dämpfungsglieds 26 ist mit dem Phasenschalter 28 verbunden.

Die Eingänge 24 und 27 sind mit der Steuerung 7 (vgl. Figur 1) des Computers 1 verbunden. Über die Steuerung 7 des Computers 1 werden auch die Phasenschalter 25 und 28 angesteuert.

Die Ausgänge der Phasenschalter 25 und 28 sind mit der Antenneneinheit 29 verbunden. Die Antenneneinheit 29 beinhaltet eine Sendeantenne zur Abstrahlung einer horizontalen (H) und einer vertikalen (V) Wellenkomponente. Der horizontale Anteil wird von dem Phasenschalter 30 geliefert und der vertikale Anteil von dem Phasenschalter 28. Durch entsprechende Ansteuerung der Dämpfungsglieder 23 und 26 sowie der Phasenschalter 30 und 28 wird von der Sendeantenne eine elektromagnetische Welle einer gewünschten Polarisationsrichtung abgestrahlt.

Die reflektierte elektromagnetische Welle wird von der Empfangsantenne der Antenneneinheit 29 empfangen. Der horizontale Anteil der empfangenen elektromagnetischen Welle wird in den Detektor 31 angegeben, der mit dem analog-digital Wandler 32 verbunden ist. Der analog-digital Wandler 32 liefert einen digitalen Intensitätswert des horizontalen Anteils der empfangenen elektromagnetischen Welle.

Entsprechend verhält es sich für den vertikalen Anteil der elektromagnetischen Welle, die in den Detektor 33 eingegeben wird; der Detektor 33 ist mit dem analog-digital Wandler 34 verbunden, der einen digitalen Intensitätswert der vertikalen Komponenten der elektromagnetischen Welle abgibt. Die horizontalen und vertikalen Intensitätswerte werden von dem Empfänger 3 an das Programm-Modul 14 (vgl. Figur 1) des Computers 1 ausgegeben.

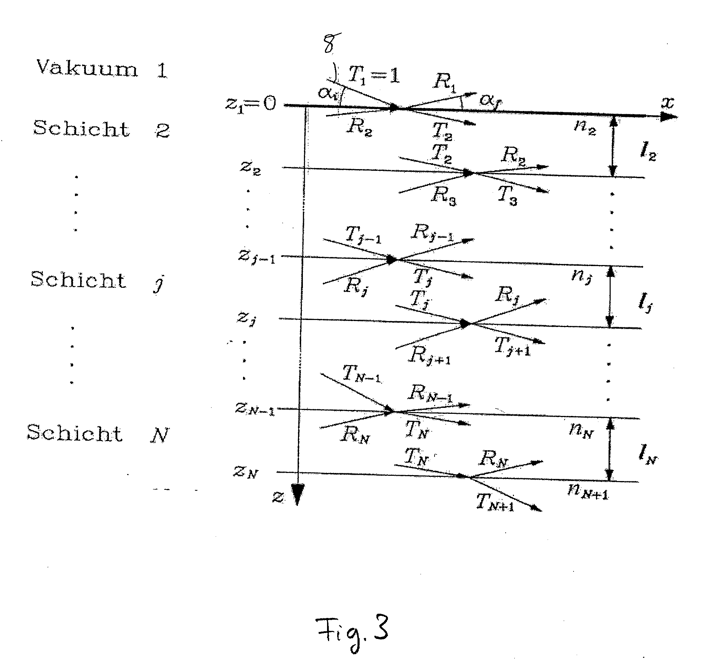

Die Figur 3 zeigt schematisch den Aufbau eines Reifens im Schnitt. An der Position $z_1 = 0$ befindet sich die Reifenoberfläche. Das Reifenprofil ist in der Schicht j = 2 zwischen $z_1 = 0$ und $z_2$ realisiert. Danach folgen weitere Schichten j. Die letzte Schicht ist die Schicht j = N

Die einfallende elektromagnetische Welle 8 (vgl. Figur 1) hat eine Amplitude $T_1$ mit dem Wert 1. Die elektromagnetische Welle 8 trifft auf die Reifenoberfläche unter einem Winke von $\alpha_i$ auf. Dort wird ein Anteil $R_1$ unter einem Winkel $\alpha$ reflektiert. Auf der anderen Seite gibt es an der Grenzfläche $z_1$ in der Profil-Materialschicht (Schicht j = 2), die reflektierte Welle der Amplitude $R_2$ und die transmittierte Welle der Amplitude $T_2$.

Entsprechend verhält es sich für die weiteren Grenzflächen an den Positionen $z_j$.

Für die Grenzfläche $z_N$ wird angenommen, das hier $R_{N+1}$ = Null ist, das heißt hier gibt es keinen reflektierten Anteil. Das liegt daran, dass die Grenzfläche $z_n$ an die Luft in dem Reifen angrenzt.

Für das in der Figur 3 gezeigte Schichtensystem lassen sich die folgenden Gleichungen angeben, die aufgrund der stetigen Differenzierbarkeit ebener Wellen an solchen Grenzflächen formuliert worden sind:

$$k_{n+1} T_n \, e^{-ik_n z_n} + k_{n+1} R_n \, e^{ik_n z_n} = k_{n+1} T_{n+1} \, e^{-ik_{n+1} z_{n+1}} + k_{n+1} R_{n+1} \, e^{ik_{n+1} z_{n+1}}$$

$$-k_n \, T_n \, e^{-ik_n z_n} + k_n \, R_n \, e^{ik_n z_n} = -k_{n+1} \, T_{n+1} \, e^{-ik_{n+1} z_{n+1}} + k_{n+1} \, R_{n+1} \, e^{ik_{n+1} z_{n+1}}$$

$$\text{Randbedingungen:} \qquad R_{N+1} = 0 \qquad T_1 = 1$$

wobei es sich bei $k_j = k(\square', \square'')$ um den Wellenvektor in der Schicht zwischen den Grenzflächen j-1 und j handelt, bei $n_j$ um den Brechungsindex der Schicht j und bei N um die Gesamtzahl der Schichten. Die Schichtdicke der Schicht j beträgt $l_j = z_j - z_{j-1}$.

Die o.a. Bedingungen beziehen sich auf die Wellenfunktion einer ebenen Welle, die sich durch das Schichtsystem ausbreitet und diese Bedingungen an den Grenzflächen zu erfüllen hat.

Aus der Bedingung der stetigen Differenzierbarkeit für die Wellenfunktion der ebenen Welle an den Grenzflächen lässt sich also unter Berücksichtigung der Randbedingungen ein Gleichungssystem formulieren, dass sich bei Vorliegen von ausreichend vielen Messwerten zumindest approximativ numerisch lösen lässt.

Insbesondere lässt sich auf diese Art und Weise der Laufflächenbereich eines Lkw-Reifens modellieren. Die einzelnen Schichten eines LKW-Reifen sind der Laufstreifen (Profilierter Bereich), Unterprofil, Cushion, drei bis vier gummierte Stahlgürtellagen, die Karkasse und die Innenschicht. Jede einzelne besitzt eine andere chemische Zusammensetzung. Aus diesen unterschiedlichen Zusammensetzungen ergeben sich in der Regel unterschiedliche dielektrische Eigenschaften. Diese dielektrischen Eigenschaften beschreiben die Wechselwirkung der jeweiligen Schicht mit einer einfallenden elektromagnetischen Welle. Die dielektrischen Eigenschaften kann im allgemeinen durch den komplexen Brechungsindex $n = \sqrt{\varepsilon' + i\varepsilon''}$ dargestellt werden.

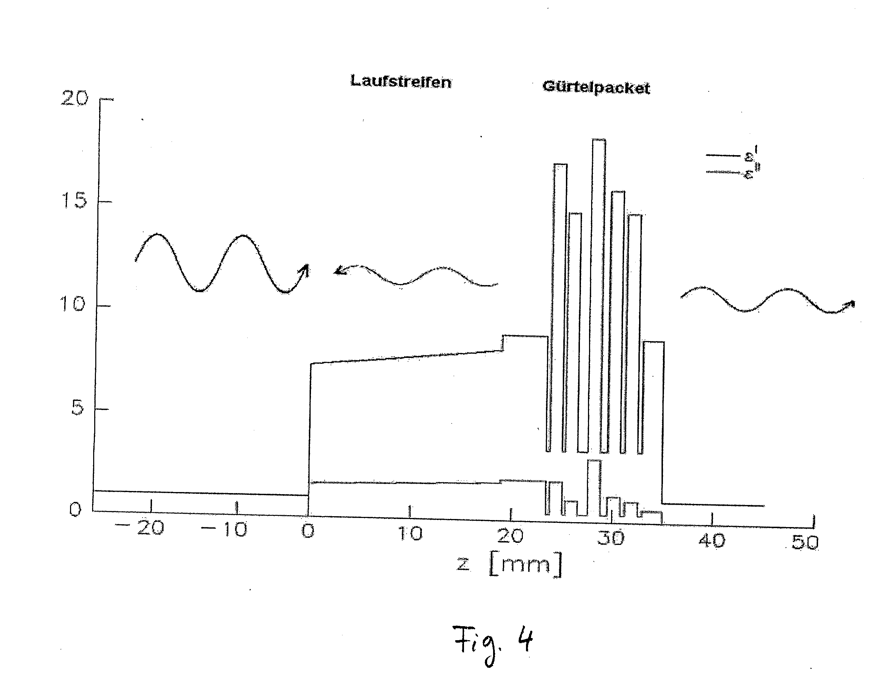

Die Figur 4 zeigt qualitativ den Verlauf der dielektrischen Funktion $\varepsilon'$ und $\varepsilon''$ senkrecht zur Reifenoberfläche. An der Position z = 0 mm befindet sich die Reifenoberfläche, bei z = 20 mm der Profilgrund, bei z = 24 mm die Oberfläche des ersten Stahlgürtels, bei z = 31 mm die Oberfläche der Karkassenlage und bei z = 35 mm die Reifeninnenseite.

An jeder Grenzfläche des Schichtsystems bzw. bei jedem Sprung in der dielektrischen Eigenschaft im Reifen wird ein Teil der einfallenden elektromagnetische Welle reflektiert bzw. transmittiert. Für eine glatte Grenzfläche zwischen den Schichten k und k+1 wird der Anteil der reflektierten bzw. transmittierten Welle durch die Fresnel'schen Koeffizienten beschrieben.

Diese lauten:

$$r_{k,\,k+1} = \frac{n_k - n_{k+1}}{n_k + n_{k+1}} \qquad t_{k,\,k+1} = \frac{2n_{k+1}}{n_k + n_{k+1}}$$

Ist $E_k$ die Amplitude der elektromagnetischen Welle, die durch die Schicht k wandert und auf die Grenzfläche zwischen den Schichten k und k+1 trifft, so gilt für die Amplitude der reflektierten Welle $R_k$ und der transmittierten Welle $T_{k+1}$:

$$R_k = r_{k,k+1} \cdot E_k \qquad T_{k+1} = t_{k,k+1} \cdot E_k$$

Die Amplitude $T_{k+1}$ entspricht wiederum der Amplitude $E_{k+1}$, die durch die Schicht k+1 wandert und an der Grenzfläche zwischen den Schichten k+1 und k+2 reflektiert bzw. transmittiert wird. Die Intensität der reflektierten Welle ist gegeben durch das Betragsquadrat der Reflexionsamplitude.

In dem betrachteten Fall gehen wir nun von einer ebenen elektromagnetischen Welle

$$E_{Luft} \cdot e^{i(n \cdot k \cdot z - w \cdot t)}$$

aus, die senkrecht auf die Reifenoberfläche trifft. k ist der Wellenvektor, der gegeben ist durch $k = 2\pi/\lambda$, wobei $\lambda \square$ die Wellenlänge der einfallende Welle ist. n ist der komplexe Brechungsindex. Die Werte geeigneter Wellenlängen für Anwendungen am Reifen liegen z. B. im Bereich von 1-10GHz.

Der Reifen beinhaltet im Laufflächenbereich mehrere dielektrischen Grenzflächen. An jeder einzelnen Grenzfläche werden elektromagnetische Wellen reflektiert. Durch Überlagerung der einzelnen reflektierten Wellen ergibt sich je nach Abstand der einzelnen Grenzflächen eine charakteristische Gesamtintensität aller reflektierten Wellen. Sind außer der Profiltiefe alle anderen Schichtbreiten bekannt, so kann aus der absoluten Intensität der reflektierten Wellen die Profiltiefe direkt berechnet werden. Der entsprechende Formalismus ist in der Fachliteratur der 'Streutheorie' hinreichend gut beschrieben. Grundlage aller Formalismen ist die Erhaltung der stetigen Differenzierbarkeit der ebenen Wellen an den Grenzflächen dielektrischer Schichten.

Für die Stahlgürtellagen gilt zudem, dass die dielektrischen Eigenschaft dieser Schichten nicht isotrop ist. Das bedeutet, dass die Stahlgürtellage je nach Polarisation einer linear polarisierten, ebenen Welle unterschiedlich wechselwirkt. So hat zum Beispiel die elektrische Leitfähigkeit einen wesentlichen Einfluss auf die dielektrische Eigenschaft der Stahlgürtellage. Diese elektrische Leitfähigkeit ist in Richtung der Stahldrähte wesentlich größer als in der Richtung senkrecht zur den Stahldrähten. In Richtung der Stahldrähte wird der Widerstand der Gürtelgummierung durch die Stahldrähte kurzgeschlossen, während senkrecht zu den Stahldrähten der elektrische Widerstand der Gummierung einen wesentlichen Anteil am gesamten elektrischen Widerstand hat.

Die effektive dielektrische Eigenschaft einer Stahlgürtellage hängt also von der Orientierung der Polarisation der einfallenden Welle mit Bezug auf die Ausrichtung der Stahldrähte ab. Wird die Reifenoberfläche mit einer linear polarisierten Welle bestrahlt, so werden die Reflexionsamplituden an den Grenzflächen der einzelnen Stahlgürtelschichten stark von der Orientierung der Polarisation der Strahlung zur jeweiligen Orientierung der Stahldrähte abhängen.

Die Intensität aller reflektierten Wellen ist somit auch abhängig von der Ausrichtung der Polarisation der Welle zu der Ausrichtung der Stahldrähte in den einzelnen Gürtellagen. Je nach Reifenkonstruktion und Abstand der Gürtellagen zueinander bzw. dem Abstand der Gürtellagen zum Profilgrund und zur Reifenoberfläche erhält man eine reifen- und profiltiefenspezifische Variation der reflektierten Intensität in Abhängigkeit der Polarisation der einfallenden Welle.

Die Figur 3 zeigt die Intensität der reflektierten Welle (vgl. elektromagnetische Welle 13 der Figur 1), die sich aus den verschiedenen reflektierten Anteilen $R_1$ bis $R_N$ (vgl. Figur 3) zusammensetzt, und zwar für 2 mm Profiltiefe, 3 mm Profiltiefe und 5 mm Profiltiefe, jeweils in einem Bereich des Polarisationswinkels der einfallenden elektromagnetischen Welle 8 (vgl. Figur 1) zwischen 0 und 180°

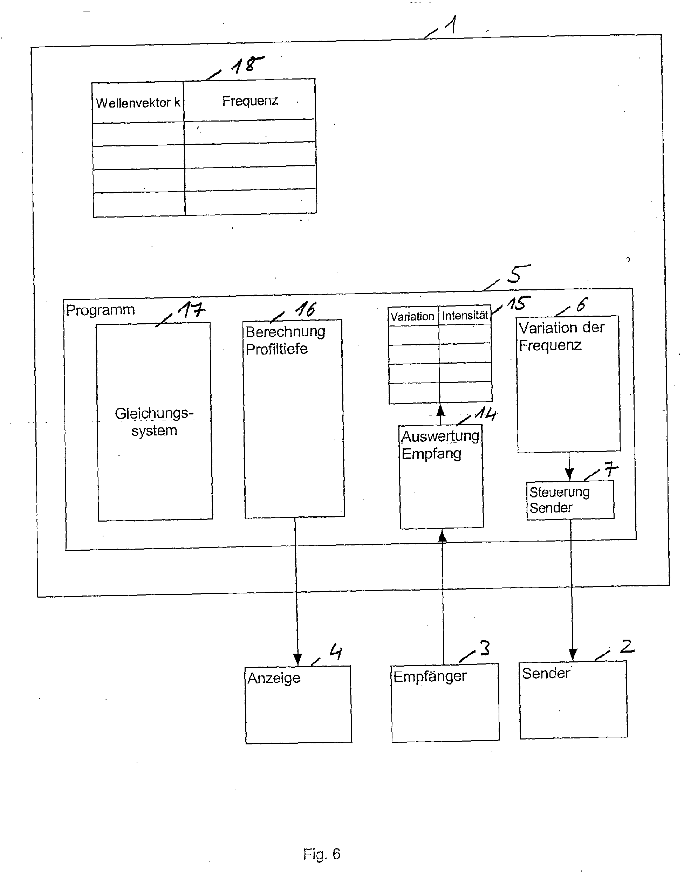

Die Figur 6 zeigt eine weitere Ausführungsform der Erfindung, bei der anstelle des Polarisationswinkels die Frequenz variiert wird. Elemente der Figur 6, die Elementen der Figur 1 entsprechen, sind mit denselben Bezugszeichen gekennzeichnet.

Das System der Figur 6 ist ähnlich aufgebaut wie das System der Figur 1. Das Programm-Modul 6 der Figur 6 variiert im Unterschied zu dem Programm-Modul 6 der Figur 1 anstelle des Polarisationswinkels die Frequenz in einem vorgegebenen Frequenzbereich. Entsprechend wird in der Tabelle 15 die Intensität der reflektierten Welle in Abhängigkeit von der Frequenz erfasst. In dem Speicher 18 ist der Wellenvektor k in Abhängigkeit von der Frequenz für die verschiedenen Schichten gespeichert. Basierend auf den in dem Speicher 18 gespeicherten Werten für die Wellenvektoren k, den Frequenz-Intensitätspaaren der Tabelle 15 und dem Gleichungssystems 17 wird in diesem Fall die Berechnung der Profiltiefe in dem Programm-Modul 16 vorgenommen.

Alternativ ist es auch möglich, sowohl die Frequenz als auch den Polarisationswinkel zu variieren, um durch Messung der Intensität der reflektierten Welle in Abhängigkeit von der variierten Eigenschaft das Gleichungssystem 17 für die Berechnung der Profiltiefe zu lösen. Dabei ist es vorteilhaft, wenn die Schichtdicken der Schichten j - bis auf die Dicke der Reifenprofilschicht j = 2 - bekannt sind, da dies die Lösung des Gleichungssystems 17 vereinfacht. Es ist jedoch nicht zwingend erforderlich, dass die Schichtdicken der Schichten j = 3 bis j = N a priori bekannt sind, um das Gleichungssystem 17 zu lösen.

**Bezugszeichenliste**

| | |
|---|---|
| Computer | 1 |
| Sender | 2 |
| Empfänger | 3 |
| Anzeige | 4 |
| Programm | 5 |
| Programm-Modul | 6 |
| Steuerungs-Modul | 7 |
| elektromagnetische Welle | 8 |
| Reifenoberfläche | 9 |
| Profil-Materialschicht | 10 |
| Grenzfläche | 11 |
| Materialschicht | 12 |
| elektromagnetische Welle | 13 |
| Programm-Modul | 14 |
| Tabelle | 15 |
| Programm-Modul | 16 |

| | |
|---|---|
| Gleichungssystem | 17 |
| Speicher | 18 |
| Speicher | 19 |
| Mikrowellen-Quelle | 20 |
| Leistungsteiler | 21 |
| Ausgang | 22 |
| Dämpfungsglied | 23 |
| Eingang | 24 |
| Ausgang | 25 |
| Dämpfungsglied | 26 |
| Eingang | 27 |
| Phasenschalter | 28 |
| Antenneneinheit | 29 |
| Phasenschalter | 30 |
| Detektor | 31 |
| analog-digital Wandler | 32 |
| Detektor | 33 |
| analog-digital Wandler | 34 |

**Patentansprüche**

1. Verfahren zur Bestimmung einer Reifenprofiltiefe für einen Reifen mit einer Profil-Materialschicht (10, j = 2) und zumindest einer zweiten Materialschicht (12), wobei die Grenzfläche (11, $z_j$) zwischen der Profil-Materialschicht und der zweiten Materialschicht ein von einer Eigenschaft einer einfallenden elektromagnetischen Welle (8) abhängiges Reflexionsverhalten aufweist, mit folgenden Schritten:

   - Aussenden einer ersten elektromagnetischen Welle mit einer ersten Eigenschaft,

   - Empfang einer ersten reflektierten elektromagnetischen Welle,

   - Aussenden einer zweiten elektromagnetischen Welle mit einer zweiten Eigenschaft,

   - Empfang einer zweiten reflektierten elektromagnetischen Welle,

   - Berechnung der Dicke der Profil-Materialschicht basierend auf den ersten und zweiten reflektierten elektromagnetischen Wellen.

2. Verfahren nach Anspruch 1, wobei die ersten und zweiten elektromagnetischen Wellen polarisiert sind und die erste elektromagnetische Welle einen ersten Polarisationswinkel und die zweite elektromagnetische Welle einen zweiten Polarisationswinkel aufweist.

3. Verfahren nach Anspruch 2, wobei der Polarisationswinkel in einem Bereich zwischen 0 und 180°, vorzugsweise zwischen 0 und 360° kontinuierlich oder in diskreten Abständen zum Empfang weiterer reflektierter elektromagnetischer Wellen variiert wird.

4. Verfahren nach Anspruch 1, 2 oder 3, wobei auf eine Kennlinie des Wellenvektors (k) in Abhängigkeit des Polarisationswinkels zugegriffen wird.

5. Verfahren nach Anspruch 4, wobei weitere Grenzflächen in dem Reifen vorhanden sind und für jede der Grenzflächen auf einen Polarisationswinkel-Offset zugegriffen wird.

6. Verfahren nach einem der vorhergehenden Ansprüche 1 bis 5, wobei die erste elektromagnetische Welle eine erste Frequenz und die zweite elektromagnetische Welle eine zweite Frequenz aufweist.

7. Verfahren nach Anspruch 6, wobei die Frequenz kontinuierlich oder in diskreten Schritten innerhalb eines vorgegebenen Frequenzbereichs variiert wird, um weitere reflektierte Wellen zu erhalten.

8. Verfahren nach Anspruch 6 oder 7, wobei die reflektierte Intensität in Abhängigkeit der Frequenz bestimmt wird.

9. Verfahren nach einem der vorhergehenden Ansprüche 1 bis 8, wobei anhand der charakteristischen Variation der reflektierten Intensität in Abhängigkeit der Frequenz der eingestrahlten Welle die Berechnung der Dicke der Profil Materialschicht, basierend auf der stetigen Differenzierbarkeit der Wellefunktion der elektromagnetischen Wellen an den Grenzflächen durchgeführt wird.

10. System zur Bestimmung einer Reifenprofiltiefe mit

   - Mitteln (2) zum Aussenden einer elektromagnetischen Welle (8) mit einer ersten oder einer zweiten Eigenschaft,

   - Mitteln (3) zum Empfang einer von dem Reifen reflektierten elektromagnetischen Welle,

   - Mitteln (16) zum Berechnen der Profiltiefe basierend auf dem Reflexionsverhalten einer ersten elektromagnetischen Welle mit einer ersten Eigenschaft und einer zweiten elektromagnetischen Welle mit einer zweiten Eigenschaft an einer Grenzfläche in dem Reifen.

11. System nach Anspruch 10, wobei die elektromagnetische Welle linear polarisiert ist und es sich bei der ersten Eigenschaft um einen ersten Polarisationswinkel und bei der zweiten Eigenschaft um eine zweiten Polarisationswinkel handelt.

12. System nach Anspruch 10 oder 11, mit Mitteln (6) zur Variation des Polarisationswinkels in einem vorgegebenen Winkelbereich, vorzugsweise zwischen 0 und 180° oder zwischen 0 und 360°.

13. System nach Anspruch 10, 11 oder 12, mit Mitteln (18) zur Speicherung einer Kennlinie des effektiven Wellenvektors (k) in Abhängigkeit von dem Polarisationswinkel.

14. System nach Anspruch 13 mit Mitteln zur Speicherung eines Polarisationswinkel-Offsets (19) für weitere Grenzflächen in dem Reifen.

15. System nach einem der vorhergehenden Ansprüche 10 bis 14, wobei es sich bei der ersten Eigenschaft um eine erste Frequenz und bei der zweiten Eigenschaft um eine zweite Frequenz handelt.

16. System nach Anspruch 15, wobei die Mittel zum Aussenden der elektromagnetischen Welle zur Variation der Frequenz innerhalb eines Frequenzbereichs ausgebildet sind.

17. System nach einem der vorhergehenden Ansprüche 10 bis 16, wobei es sich bei der elektromagnetischen Welle um eine Mikrowelle handelt.

18. Computerprogramm zur Bestimmung einer Reifenprofiltiefe, **dadurch gekennzeichnet, dass** die Berechnung der Reifenprofiltiefe basierend auf der stetigen Differenzierbarkeit der Wellenfunktion einer linear polarisierten elektromagnetischen Welle an ein oder mehreren Grenzflächen in dem Reifen erfolgt, wobei die Grenzflächen so ausgebildet sind, dass das Reflexionsverhalten von einer Eigenschaft der einfallenden elektromagnetischen Welle abhängt.

Fig. 1

Fig. 2

Fig. 3

Fig. 4

Fig. 5

_1_

_18_

| Wellenvektor k | Frequenz |
|---|---|
| | |
| | |
| | |
| | |

_5_

**Programm** _17_

_16_

_15_

_6_

| Variation | Intensität |
|---|---|
| | |
| | |
| | |

Berechnung
Profiltiefe

Variation der
Frequenz

Gleichungssystem

_14_

Auswertung
Empfang

_7_

Steuerung
Sender

_4_

_3_

_2_

Anzeige

Empfänger

Sender

Fig. 6

EP 1 348 933 A1

| Europäisches Patentamt | EUROPÄISCHER RECHERCHENBERICHT | Nummer der Anmeldung |
|---|---|---|
| | | EP 03 00 5698 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | GB 2 351 564 A (HERREN LONSDALE) 3. Januar 2001 (2001-01-03) * Seite 8, Zeile 12 - Zeile 24; Abbildung 1 * --- | 1,10,18 | G01B15/02 B60C11/24 G01N22/00 |
| D,A | US 5 216 372 A (CSURF) 1. Juni 1993 (1993-06-01) * Spalte 2, Zeile 41 - Zeile 50 * --- | | |
| A | US 6 198 293 B1 (MIT) 6. März 2001 (2001-03-06) * Anspruch 1 * --- | | |
| A | WO 85 02266 A (GESIG) 23. Mai 1985 (1985-05-23) * Anspruch 2 * --- | | |
| A | US 3 648 164 A (DUNLOP) 7. März 1972 (1972-03-07) * Anspruch 1 * --- | | |
| P,A | DE 101 19 352 C (AUTOLIV) 28. November 2002 (2002-11-28) * Anspruch 1 * ----- | 1,10,18 | RECHERCHIERTE SACHGEBIETE (Int.Cl.7) G01B B60C G01N |

Der vorliegende Recherchenbericht wurde für alle Patentansprüche erstellt

| Recherchenort | Abschlußdatum der Recherche | Prüfer |
|---|---|---|
| MÜNCHEN | 12. Juni 2003 | Mielke, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..................................................................
& : Mitglied der gleichen Patentfamilie, übereinstimmendes Dokument

EPO FORM 1503 03.82 (P04C03)

15

**ANHANG ZUM EUROPÄISCHEN RECHERCHENBERICHT
ÜBER DIE EUROPÄISCHE PATENTANMELDUNG NR.**

EP 03 00 5698

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-06-2003

| Im Recherchenbericht angeführtes Patentdokument | Datum der Veröffentlichung | Mitglied(er) der Patentfamilie | Datum der Veröffentlichung |
|---|---|---|---|
| GB 2351564 A | 03-01-2001 | AU 5692600 A<br>CA 2376990 A1<br>CN 1371329 T<br>EP 1189771 A1<br>WO 0100429 A1<br>JP 2003503679 T<br>US 2002080045 A1 | 31-01-2001<br>04-01-2001<br>25-09-2002<br>27-03-2002<br>04-01-2001<br>28-01-2003<br>27-06-2002 |
| US 5216372 A | 01-06-1993 | US 6005397 A<br>US 5748003 A<br>AU 648005 B2<br>AU 2065292 A<br>CA 2074109 A1<br>EP 0529790 A1<br>IE 922453 A1<br>JP 5196446 A<br>ZA 9205652 A | 21-12-1999<br>05-05-1998<br>31-03-1994<br>04-02-1993<br>30-01-1993<br>03-03-1993<br>10-02-1993<br>06-08-1993<br>28-01-1994 |
| US 6198293 B1 | 06-03-2001 | KEINE | |
| WO 8502266 A | 23-05-1985 | AT 400988 B<br>AT 390783 A<br>WO 8502266 A1<br>AT 53130 T<br>DE 3482340 D1<br>EP 0189414 A1 | 28-05-1996<br>15-06-1992<br>23-05-1985<br>15-06-1990<br>28-06-1990<br>06-08-1986 |
| US 3648164 A | 07-03-1972 | DE 2022679 A1<br>ES 379442 A1<br>FR 2042533 A5<br>GB 1312771 A | 18-02-1971<br>16-04-1973<br>12-02-1971<br>04-04-1973 |
| DE 10119352 C | 28-11-2002 | DE 10119352 C1 | 28-11-2002 |

EPO FORM P0461

Für nähere Einzelheiten zu diesem Anhang : siehe Amtsblatt des Europäischen Patentamts, Nr.12/82